# FASCICULE DE BREVET EUROPEEN

(11) **EP 0 803 717 B1**
(45) Date de publication et mention de la délivrance du brevet: **21.11.2001**
(21) Numéro de dépôt: 97400896.3
(22) Date de dépôt: 22.04.1997
(51) Int. Cl.: G01G 19/08, B66F 17/00

(54) **Tablier peseur monobloc autonome**
Autonomer einteiliger Wägetisch
Autonomous one-piece weigh-table

(30) Priorité: 22.04.1996 FR 9605129
(43) Date de publication de la demande: 29.10.1997
(73) Titulaire: Balea S.A., 34270 Saint Mathieu de Tréviers (FR)
(72) Inventeur: Fabre, Jacques, 34270 Saint Mathieu de Treviers (FR)

(56) Documents cités:
- EP-A- 0 046 692
- DE-A- 3 629 244
- FR-A- 2 639 931
- FR-A- 2 651 880
- FR-A- 2 708 585
- US-A- 4 323 132

## Description

L'invention est relative à un tablier peseur monobloc du genre comportant des fourches, des bras de liaison reliant lesdites fourches, des bras de liaison reliés de manière coulissante à des chemins de roulement appartenant à deux mâts, des capteurs, généralement à jauge de contrainte, intercalés entre lesdits bras de liaison, un boîtier de raccordement, solidaire du tablier mobile, associé à une unité de conversion analogique/numérique et à un micro-contrôleur adapté pour interpréter les mesures et transmettre les résultats à un indicateur de poids solidaire d'un support auquel les mâts sont reliés.

Les tabliers connus du genre en question, qui sont généralement fixés, par l'intermédiaire de leurs mâts, soit à une paroi fixe, soit à un engin mobile (chariot élévateur, gerbeur) comportent généralement :
- un boîtier de raccordement analogique qui utilise, pour le réglage des angles, une méthode empirique, mettant en oeuvre des moyens du type potentiomètres électriques, qui consiste à placer successivement aux quatres coins du récepteur de charge, une masse, qui représente en général 1/3 de la charge totale, et à effectuer l'équilibrage des capteurs, capteur par capteur, grâce aux potentiomètres, et d'opérer ainsi par itération jusqu'à l'obtention de l'équilibre parfait : cette méthode est longue (plusieurs heures en fonction de la charge), principalement à cause des problèmes liés aux transferts de charges;
- une liaison boîtier-support par câble, puisque nous sommes en sortie analogique, avec les inconvénients engendrés par ce type de liaison qui s'effectue entre des pièces mobiles et des pièces fixes;
- une alimentation du boîtier à partir d'une batterie qui se trouve sur la partie fixe de l'ensemble.
De tels dispositifs manquent de performances et de souplesse en particulier pour configurer le système à partir du boîtier analogique.
Ils sont essentiellement décrits dans les brevets :
- US-A-4323132 qui traite d'un chariot élévateur à fourches qui comporte un moyen électronique de mesure du poids.
L'ensemble de mesure comporte deux cadres, une pluralité de capteurs de poids reliés électriquement à un boîtier de jonction et à un circuit d'affichage.
La liaison boîtier de jonction - circuit d'affichage s'effectue en mode analogique et par câble électrique.
- DE-A-3629244 qui traite d'un chariot élévateur qui comporte des capteurs de poids intégrant des convertisseurs analogiques/digitaux.
Ledit ensemble est relié au moyen d'un câble électrique à un calculateur électronique. Les brevets suivants FR-A-2708585, EP-0046692, FR-A-2639931 et FR-A-2651880, sont cités à titre purement indicatif car ils appartiennent à l'arrière-plan technologique.

L'invention vise donc à réaliser un tablier peseur monobloc qui élimine ces divers inconvénients et qui se caractérise en ce qu'il comporte essentiellement :
- un boîtier de raccordement à traitement numérique apte à faire la sommation simultanée des mesures des capteurs éliminant ainsi les problèmes liés aux transferts de charges et simplifiant la méthode en ne plaçant la charge qu'une seule fois aux quatre angles (réglage beaucoup plus rapide);
- une liaison boîtier-support fixe par émetteur/récepteur à faisceau directif infrarouge puisque les informations sont codées en numérique (mesure du poids, tension de la batterie);
- un tiroir batterie interchangeable, solidaire du tablier, apte à alimenter les capteurs, le boîtier et l'émetteur infrarouge;
- un micro-contrôleur, appartenant au boîtier, apte à gérer les mesures (à partir de l'algorithme de réglage des angles qui a été calculé et mémorisé), le stockage des divers paramètres, le mode de mesure, le mode de configuration du système, etc.

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.
Sur ces dessins :

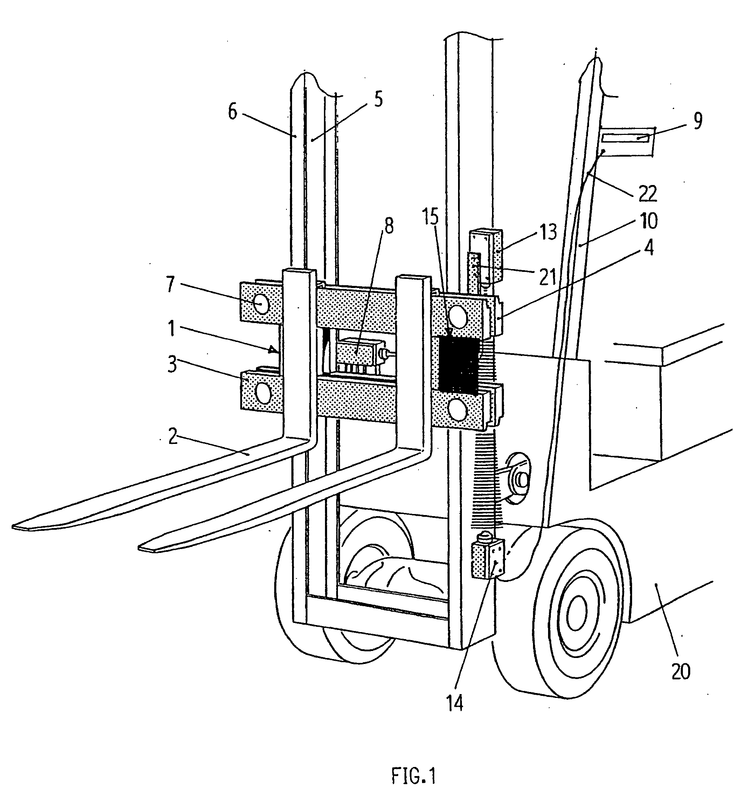

- la figure 1 est une vue en perspective d'un tablier peseur monté sur un chariot élévateur;

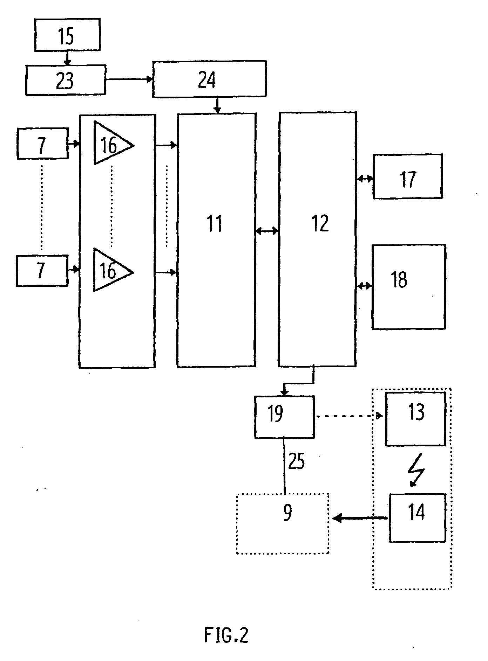

- la figure 2 est un schéma synoptique des composants et fonctions du boîtier de raccordement.

Le tablier peseur monobloc (1) représenté aux figures comporte des fourches (2), des bras de liaison (3) reliant lesdites fourches, des bras de liaison (4) reliés de manière coulissante à des chemins de roulement (5) appartenant à deux mâts (6), des capteurs (7), généralement à jauge de contrainte, intercalés entre lesdits bras de liaison (3) et (4), un boîtier de raccordement (8), solidaire du tablier mobile (3,4), adapté pour interpréter les mesures et transmettre les résultats à un indicateur de poids (9) solidaire du support (10) auquel les mâts (6) sont reliés.
Le boîtier (8) est associé à une unité de conversion analogique/numérique (11) multivoies, apte à traiter simultanément les mesures provenant des divers capteurs (7), et un micro-contrôleur (12) adapté pour effectuer automatiquement les réglages des angles, pour configurer le fonctionnement du module, pour faire la moyenne des valeurs converties et pour stocker les divers paramètres de fonctionnement.
La liaison entre ledit boîtier de raccordement (8) et les mâts (6) est réalisée au moyen d'un émetteur/récepteur (13,14), à faisceau directif infrarouge, qui est adapté pour transmettre, à l'indicateur de poids (9), les informations numériques provenant dudit boîtier (8).
Le boîtier de raccordement (8) peut être utilisé même dans le cas d'un seul capteur.
Le tablier mobile (3,4) peut comporter un tiroir batterie (15) interchangeable apte à alimenter les capteurs (7), le boîtier (8) et l'émetteur infrarouge (13).
L'émetteur (13) est par exemple fixé au bras de liaison (4) et le récepteur (14) à la base du mât (6), dans l'alignement l'un de l'autre.
Le signal donnant la tension de la batterie rechargeable (15) est relié au boîtier de raccordement (8) qui transmet ledit signal numérisé à l'indicateur de poids (9).
Le boîtier comporte en outre, en amont du convertisseur (11), pour chaque capteur (7), un module d'amplification (16) précédé d'un filtre passe-bas passif, ayant une fréquence de coupure de 20 Hz, et suivi d'un filtre-actif du deuxième ordre, centré sur 5 Hz.
Le convertisseur (11) comporte en interne un filtre numérique passe-bas à fréquence de coupure programmable.
Le micro-contrôleur (12) est associé :
- à un module (17) de stockage de paramètres du type "EEPROM";
- à un module (18) de configuration du fonctionnement de l'ensemble, comportant un bouton poussoir de prise de mesure des valeurs des capteurs lors du réglage des angles, des interrupteurs aptes à sélectionner le mode de fonctionnement et des "LED" de visualisation associés auxdits interrupteurs;
- à une carte de sortie RS 232 (19).
L'émetteur (13) est fixé au tablier (3,4) par l'intermédiaire d'un bras (21).
La liaison récepteur (14) - indicateur (9) se fait par un câble (22).
Le réglage des angles se fait simplement en appliquant successivement 1/3 de la portée maximale sur chacun des 4 angles et en validant, avec le bouton poussoir du module (18), les prises de mesure simultanées des 4 capteurs (grâce au convertisseur A/N multivoies) et leur mémorisation instantanée. Une fois le tour des angles effectué, le micro-contrôleur (12) calcule automatiquement l'algorithme de réglage (qui prend en compte les transferts de charges) et en stocke les paramètres. Cet algorithme est ensuite appliqué automatiquement à chaque calcul de la moyenne des signaux.
Le microcontrôleur assure le traitement et la mise en forme des mesures.
II sert :
- à initialiser le convertisseur en programmant notamment sa fréquence de coupure et à récupérer le résultat de la conversion des 4 voies;
- à faire la moyenne (cas de plusieurs capteurs) des valeurs converties en tenant compte du réglage des angles;
- à envoyer le résultat de la moyenne au format RS 232;
- à calculer l'algorithme de réglage des angles avec stockage dans la mémoire "EEPROM";
- à configurer le fonctionnement du module;
- à surveiller le fonctionnement de la boîte avec envoi des messages d'erreurs éventuels; avec en particulier la surveillance de la tension d'alimentation et des valeurs stockées dans la mémoire.
Les modes de fonctionnement du module (18) sont par exemple les suivants :
- mode mesure;
- mode configuration (acquisition du nombre des capteurs);
- mode de réglage semi-automatique des angles (calcul des paramètres de l'algorithme).
Tous les paramètres de configuration et de calibration du tablier sont transmis à l'indicateur de poids (9) solidaire du chariot (20) par exemple. Dès que la batterie n'a plus la charge suffisante pour éviter toute erreur de lecture, le boîtier bloque les mesures jusqu'à son remplacement.
La batterie (15) sert à alimenter le module (23) d'alimentation des capteurs et le module (24) d'alimentation de l'électronique (tension de référence à une correction ratiométrique).
La liaison sortie (19) - indicateur (9) peut se faire par câble (25).

Bien entendu, l'invention n'est pas limitée aux modes de réalisation décrits et représentés pour lesquels on pourra prévoir d'autres variantes en particulier dans :
- le nombre et le type de capteurs;
- le type de liaison entre le boîtier et l'indicateur;
- les caractéristiques des modules (amplificateurs, convertisseur, micro-contrôleur, mode de stockage) entrant dans la composition du boîtier;
sans pour cela sortir du cadre de l'invention.

## Revendications

1. Tablier peseur monobloc (1) du genre comportant des fourches (2), des bras de liaison (3) reliant lesdites fourches, des bras de liaison (4) reliés de manière coulissante à des chemins de roulement (5) appartenant à deux mâts (6), des capteurs (7), généralement à jauge de contrainte, intercalés entre lesdits bras de liaison (3) et (4), un boîtier de raccordement (8), solidaire du tablier mobile (3,4), associé à une unité de conversion analogique/numérique (11) et à un micro-contrôleur (12) adapté pour interpréter les mesures et transmettre les résultats à un indicateur de poids (9) solidaire d'un support (10) auquel les mâts (6) sont reliés;
**caractérisé en ce que** l'unité de conversion analogique/numérique (11) est réalisée au moyen d'un convertisseur multivoies, dont le nombre de voies correspond au nombre de capteurs intercalés entre les bras de liaison (3) et (4), apte à mesurer simultanément et à mémoriser les diverses valeurs de charge données par lesdits capteurs; **en ce que** le micro-contrôleur est adapté pour effectuer automatiquement le réglage des angles, pour configurer le fonctionnement du module, pour réaliser la moyenne des valeurs converties et pour stocker les divers paramètres de fonctionnement, et **en ce que** la liaison entre le boîtier et raccordement (8), solidaire du tablier mobile (3,4), et l'indicateur de poids (9), solidaire des mâts fixes (6), est réalisée au moyen d'un émetteur/récepteur (13,14), à faisceau directif infrarouge, qui est adapté pour transmettre les informations numériques relatives en particulier aux résultats des mesures de poids.

2. Tablier peseur, selon la revendication 1, **caractérisé en ce que** le boîtier (8) comporte, en amont du convertisseur A/N (11), pour chaque capteur (7), un module d'amplification (16) précédé d'un filtre passe-bas passif, ayant une fréquence de coupure de 20 Hz, et suivi d'un filtre-actif du deuxième ordre centré sur 5 Hz.

3. Tablier peseur, selon la revendication 1, **caractérisé en ce que** le convertisseur A/N (11) comporte, en interne, un filtre numérique passe-bas à fréquence de coupure programmable.

4. Tablier peseur, selon la revendication 1, **caractérisé en ce que** le micro-contrôleur (12) est associé au module (17), de stockage des paramètres, du type "EEPROM".

5. Tablier peseur, selon la revendication 1, **caractérisé en ce que** le micro-contrôleur (12) est associé à un module (18), de configuration du fonctionnement de l'ensemble, comportant un bouton poussoir de prise de mesure des valeurs du capteur lors du réglage des angles, des interrupteurs aptes à sélectionner le mode de fonctionnement et des "LED" de visualisation associés auxdits interrupteurs.

6. Tablier peseur, selon la revendication 1, **caractérisé en ce que** le micro-contrôleur (12) est associé à une carte de sortie RS 232 (19).

7. Tablier peseur, selon la revendication 1, **caractérisé en ce que** le tablier mobile (3,4) comporte un tiroir batterie (15) interchangeable apte à alimenter les capteurs (7), le boîtier (8) et l'émetteur (13).

8. Tablier peseur, selon la revendication 7, **caractérisé en ce que** le signal donnant la tension de la batterie rechargeable (15) est relié au boîtier (8) qui transmet ledit signal numérisé à l'indicateur (9).

## Patentansprüche

1. Monoblock-Wiege-Gabelträger (1) der Art, welche Gabeln (2) beinhaltet, Verbindungsträger (3) zwischen den genannten Gabeln, Verbindungsträger (4), die verschiebbar mit Laufrillen (5) zusammengebaut sind, welche zu zwei Masten (6) gehören, sowie Fühler (7), die im allgemeinen Dehnmessfühler sind, welche zwischen den genannten Verbindungsträgern (3) und (4) eingebaut sind, einen Anschlusskasten (8), welcher am beweglichen Hubrahmen (3,4) fest eingebaut ist, und mit einem Analog/Digitalwandler (11) sowie mit einem Mikro-Steuergerät (12) zusammengebaut ist, welcher speziell zur Aufnahme der Messergebnisse und Übertragung derselben an eine Gewichtsanzeige (9) konstruiert ist, welche fest an einer Halterung (10) angebaut ist mit welcher die Masten (6) in Verbindung stehen;
**dadurch gekennzeichnet, dass** die AnaloglDigital-Wandlereinheit (11) ein Mehrweg-Wandler ist, dessen Weganzahl der Anzahl von Fühlem entspricht, welche zwischen den Verbindungsträgern (3) und (4) eingebaut werden, und dazu geeignet ist, gleichzeitig die verschiedenen Lastwerte zu messen und aufzuspeichern, die von den genannten Fühlern übermittelt werden; dass das genannte Mikro-Steuergerät dazu geeignet ist, automatisch die Winkeleinstellung durchzuführen, um den Betrieb des Moduls in geeigneter Weise zu gestalten, um die Mittelwerte der dieserweise gewandelten Werte zu errechnen, die verschiedenen Betriebsparameter zu speichern und dadurch, dass die Verbindung zwischen dem Anschlusskasten (8), welcher am beweglichen Hubrahmen (3,4) fest eingebaut ist, und der Gewichtsanzeige (9), welche an den feststehenden Masten (6) fest eingebaut ist, vermittels eines Sender/Empfägers (13,14), welcher ein Infrarot-Richtstrahltransceiver ist, durchgeführt wird, welcher dazu geeignet ist, die in Zahlen ausgedrückte Information über die Ergebnisse der Gewichtsbestimmung zu übertragen.

2. Wiege-Gabelträger, gemäss Patentanspruch 1, **dadurch gekennzeichnet, dass** der Anschlusskasten (8) vor dem A/D-Wandler (11) pro Fühler (7) mit einem Verstärkermodul (16) ausgestattet ist, welchem ein passiver Tiefpassfilter vorgeschaltet ist, dessen Grenzfrequenz 20 Hz beträgt und dem ein auf 5 Hz zentrierter Aktiv-Filter 2. Ordnung nachgeschaltet ist.

3. Wiege-Gabelträger, gemäss Patentanspruch 1, **dadurch gekennzeichnet, dass** der A/D-Wandler (11) intern ein grenzfrequenzprogrammierbares numerisches Tiefpassfilter enthält.

4. Wiege-Gabelträger, gemäss Patentanspruch 1, **dadurch gekennzeichnet, dass** das Mikro-Steuergerät (12) mit dem Modul (17) zusammengebaut ist, welcher Parameter speichert und von der Art eines elektrisch löschbaren, programmierbaren Festwertspeichers ("EEPROM") ist.

5. Wiege-Gabelträger, gemäss Patentanspruch 1, **dadurch gekennzeichnet, dass** das Mikrosteuergerät (12) mit einem Modul (18) zusammengebaut ist, dem die Betriebsgestaltung des ganzen Gerätes obliegt und welcher eine Drucktaste zur Entnahme der vom Fühler nach Winkeleinstellung abgegebenen Messwerte, sowie Schalter enthält, die geeignet sind, die Betriebsweise und die den genannten Schaltem zugeordneten Anzeige-"LED"s auszuwählen.

6. Wiege-Gabelträger, gemäss Patentanspruch 1, **dadurch gekennzeichnet, dass** das Mikro-Steuergerät (12) an eine Ausgangsdruckschaltung vom Typ RS 232 (19) angeschaltet ist.

7. Wiege-Gabelträger, gemäss Patentanspruch 1, **dadurch gekennzeichnet, dass** der bewegliche Gabelträger (3,4) einen auswechselbaren Batterieeinschub (15) enthält, dessen Zweck es ist, die Fühler (7), den Anschlusskasten (8) und den Sender (13) mit Strom zu versorgen.

8. Wiege-Gabelträger, gemäss Patentanspruch 7, **dadurch gekennzeichnet, dass** das Signal zur Spannungsanzeige des Akku's (15) an den Anschlusskasten (8) angeschaltet ist, welcher das genannte, in Ziffern umgewandelte Signal an das Anzeigegerät (9) abgibt.

## Claims

1. Monobloc weighing platform (1) of the kind including forks (2), linking arms (3)linking that forks, linking arms (4) slidingly linked to runways (5) pertaining to two masts (6), sensors (7) generally with strain gauge, intercalated between the said linking arms (3) and (4), and a joining casing (8) integral with the moving platform (3, 4), associated to an analog/digital converting unit (11) and to a microcontroller (12) adapted for interpreting the measurements and transmitting the results to a weight indicator (9) integral with a support (10) to which the masts (6) are linked;
**characterized in that** the analog/digital converting unit (11) is made by means of a multiway converter the number of ways of which corresponds to the number of sensors intercalated between the linking arms (3) and (4), adapted for simultaneously measuring and storing the several values of load provided by the said sensors; **in that** the microcontroller is adapted for automatically carrying out angles setting for configuring the module operation, for performing the average of the converted values and for storing the different operation parameters , and **in that** the linkage between the casing and the joint (8) integral with the moving platform (3, 4) and the weigh indicator (9), integral with the fixed masts (6) is carried out by means of a transmitting/receiving device (13,14), having a directing infrared beam, which is adapted for transmitting the digital data namely relating to the results of the weigh measurements.

2. Weighing platform, according to claim 1, **characterized in that** the casing (8) comprises, upstream the A/D converter (11), for each sensor (7) an amplification module (16) preceded by a passive low-pass filter having a 20 Hz cut-off frequency, and followed by an active filter of the second order centred on 5 Hz.

3. Weighing platform, according to claim 1, **characterized in that** the A/D converter (11) internally comprises a digital low-pass filter having a programmable cut-off frequency.

4. Weighing platform, according to claim 1, **characterized in that** the microcontroller (12) is associated to the module (17) storing the parameters, of the EEPROM type.

5. Weighing platform, according to claim 1, **characterized in that** the microcontroller (12) is associated to a module (18) having a unit operation configuration , comprising a push button for measuring values from the sensor when the angles are being set, switches adapted for selecting the operation mode and the display LEDs associated to that switches.

6. Weighing platform, according to claim 1, **characterized in that** the microcontroller (12) is associated to an issue card RS 232 (19).

7. Weighing platform, according to claim 1, **characterized in that** the moving platform (3, 4) comprises an interchangeable battery drawer (15) adapted to feed the sensors (7), the casing (8) and the transmitter (13).

8. Weighing platform, according to claim 7, **characterized in that** the signal providing the voltage of the reloadable battery (15) is linked to the casing (8) which releases the said digitalized signal to the indicator (9).
